# EUROPEAN PATENT SPECIFICATION

(11) **EP 0 419 439 B1**
(45) Date of publication and mention of the grant of the patent: **23.07.1997**
(21) Application number: 90870150.1
(22) Date of filing: 17.09.1990
(51) Int. Cl.: B32B 27/10, B60R 13/02

(54) **Moldable headliner**
Verformbarer Dachhimmel
Revêtement de toit moulable

(30) Priority: 18.09.1989 US 408584
(43) Date of publication of application: 27.03.1991
(73) Proprietor: INTERNATIONAL PAPER COMPANY, Purchase New York 10577 (US)
(72) Inventor: Holtrop, James Scott, Chesterfield, Missouri 63017 (US); Wan-Cheng, Lucy Ka-Po, St. Charles, Missouri 63303 (US)
(74) Representative: Kearney, Kevin David Nicholas

(56) References cited:
- EP-A- 0 146 521
- EP-A- 0 160 323
- GB-A- 1 182 657
- US-A- 3 867 240

## Description

### BACKGROUND OF THE INVENTION

### 1. Field of the Invention

This invention relates to light weight, low cost thermoformable laminates suitable for making headliners for automobiles and, in particular, to thermoformable laminates comprising a sheet of foamed thermoplastic polymer having a sheet of paper laminated to one side thereof.

### 2. Description of the Prior Art

Fome-Cor® board, a product produced by Monsanto Company and consisting of a sheet of a polystyrene foam having a sheet of kraft paper laminated to each side thereof, had been used in the past to provide automobile headliners where only a slight amount of shaping of the laminate was required to provide the required headliners. Such a product is disclosed in US-A-3867240 but the foam is perforated to give it flexibility. The shaping was accomplished by die-cutting and scoring techniques or by pressing the board to form the desired shape and then applying a resin to the laminate to fix its new shape. However, modern automobile headliners are more complex in shape and cannot be shaped by the foregoing techniques. Attempts to achieve such complex shapes with Fome-Cor board by conventional thermoforming techniques have not been entirely successful because thermoforming of the board into complex shapes involves greater depth of draw thereby causing the paper to severely wrinkle on the inside (concave) surface of deformations and to severely tear and separate on the outside (convex) surfaces of the deformations. Severe wrinkles are unacceptable because they telescope through the finished headliner and become a defect that is visible from the interior of the automobile. Severe tears and separations on the reverse surface of the finished headliner are also unacceptable because they cause the headliner to sag with time. Treatment of Fome-Cor board with water and steam gives it limited, but not fully acceptable, forming characteristics. Therefore, laminates such as Fome-Cor board, although light weight and relatively inexpensive as compared to other laminates which use, for example resin reinforced non-woven glass fiber fabric layers, have not been used for headliner applications in modern automobiles because they are not thermoformable.

### SUMMARY OF THE INVENTION

The present invention provides a light weight, low cost thermoformable laminate suitable for making headliners of complex shapes.

In accordance with the present invention, a thermoformable laminate comprises a sheet of foamed thermoplastic polymer having a sheet of water-resistant paper laminated to one side thereof, and is characterised in that the said paper has a stretch value of at least 4% in the machine direction and of at least 2.5% in the cross-machine direction; a tensile strength value of at least 25 lbs/in. (4.5 kg/cm) in the machine direction and of at least 12 lbs/in. (2.1 kg/cm) in the cross-machine direction and a basis weight value of at least 15 lbs/1000 ft² (73.25 g/m²), where said values are selected so that after thermoforming of said laminate said paper does not have significant wrinkles or significant tears, and in that the said paper has a polypropylene or polyethylene film coating on one side thereof remote from the foamed polymer, and in that the foamed thermoplastic is an alloy of polystyrene and polyphenylene oxide. By the term "significant wrinkles" is meant wrinkles which, in the finished headliner, telescopes through the finished headliner to form visible defects on the other side. By the term "significant tears" is meant tears that cause the finished headliner to sag after it is installed in an automobile. The finished headliner typically includes an outer decorative layer facing the interior of the automobile, such as a non-woven polyester fabric or a nylon tricot knit with attached polyurethane foam.

The properties listed below, when given herein, are determined in accordance with the Technical Association of the Pulp and Paper Industry (TAPPI) Test Methods:

| Property | Test Method |
|---|---|
| basis weight | T410 |
| stretch | T457 |
| tensile strength | T404 |

Headliners thermoformed from the laminates of the present invention are environmentally stable and have good stiffness and strength characteristics.

### DESCRIPTION OF THE PREFERRED EMBODIMENTS

Conventional additives such as foam controlling agents and the like can be incorporated into the foam-forming resin.

Extensible Paper useful in practicing the invention includes commercially available paper consisting of wood fiber based paper, for example, No. 53600 XKL kraft paper available from Thilmany Paper and Pulp Company. Water-resistance may be imparted to Extensible Paper by any one of several conventional techniques. For example, during manufacture of the paper, the wood fibers can be sized with an appropriate polymeric sizing agent by adding the agent directly to the stock as beater additives or the Extensible Paper may be passed through a size solution or a roller wetted with a size solution. However, preferably, a barrier coating is provided on the surface of the Extensible Paper to protect it from moisture. The barrier coating can be provided in a conventional manner and may be formed by either changing the wettability of the linerboard surface with sizing agents or by coating the paper with a continuous film of a material, such as, wax, polyethylene or polypropylene. Polyethylene coatings are preferred and can be applied by extrusion and provide a durable and flexible coating. Water-resistant Extensible Paper, suitable for use in practicing the invention is commercially available, for example, 60 lb. (27.2 Kg) natural No. 53600 XKL kraft paper having a 21.6 lb. (9.8 Kg) gloss low density polyethylene coating (0.32 mm thick) on one side thereof is commercially available from Thilmany Paper and Pulp.

According to one preferred embodiment of the invention, the thermoformable laminate consists only of a sheet of foamed thermoplastic polymer having a sheet of water-resistant Extensible Paper laminated to one side thereof. In this instance, the automobile manufacture, after thermoforming the laminate, attaches a decorative fabric layer to the other side of the foamed sheet. This embodiment permits the automotive manufacturer to use certain decorative fabrics (e.g. a nylon tricot knit with attach polyurethane foam) of his choice. According to another preferred embodiment of the invention, the thermoformable laminate consists of a sheet of foamed thermoplastic polymer having a non-woven fabric layer (e.g. a non-woven fabric comprising polyester or acrylic fibers or a blend of polyester and wood pulp fibers) that can endure thermoforming conditions laminated to one side thereof and a water-resistant Extensible Paper laminated to the other side of the foamed sheet. The thermoformable laminates of the invention may, if desired, also include one or more additional components, such as decorative, reinforcing and/or acoustical layers, conventionally used in the manufacture of headliners. However, from the standpoint of cost and weight, such additional components are not recommended.

The components of the laminates of the present invention can be assembled in a conventional manner, for example, by using adhesives routinely used for this purpose or by melt bonding. The water-resistant Extensible Paper, of course, is laminated to the foamed sheet so that the barrier coating or water-resistant material is exposed.

Laminates of the present invention will typically have a thickness in the range of 2 to 14 mm. The laminate may be cut and thermoformed to the desired headliner shape using conventional techniques. In the thermoforming operation, the laminate, for example, is heated to its softening temperature (i.e. a temperature above the glass transition temperature (Tg) of the foam [e.g. 260° to 325°F. (127° to 163°C.)] for a period of time (e.g. 6 to 30 seconds) sufficient to have foam expansion and to render the laminate pliable. The laminate is then placed in a matched mold and thermoformed to the shape or contour of the mold. The mold may be chilled or at ambient temperature. The molded laminate is then cooled to a temperature below the Tg of the foam and then removed from the mold.

The following example illustrates preparation of laminates of the present invention.

### EXAMPLE

A 75/25, by weight, alloy of polystyrene and polyphenylene oxide is used to prepare a foamable thermoplastic polymer sheet having a thickness of 300 mils (7.6 mm). 60 lb. natural No. 53600 natural kraft paper having a 1.25 mil (0.32 mm) 21.6 lbs (9.8 Kg). gloss low density polyethylene paper) film coating on one side thereof is laminated to one side of the foamed sheet using a hot melt polyamide adhesive so that the polyethylene film is exposed. The paper has a basis weight of 20 lbs./1000 ft.² (97.7 g/m²), a stretch of 8% in the machine direction and 4.9% in the cross-machine direction and a tensile strength of 31 lbs./in. (5.5 g/cm) in the machine direction and 18 lbs/in (3.2 g/cm) in the cross-machine direction. A polyester non-woven fabric is then laminated to the other side of the foamed sheet using a hot melt polyester adhesive. The resulting laminate has a thickness of about 450 mils (11.4 mm). The laminate structure is cut and thermoformed to the headliner shape for a full size car in a Dry Poll thermoformer. The structure is in the heater section for 20 seconds where it reached a surface temperature in the range of 260°F. to 325°F. (127° to 163°C.). The heated sheet is then moved into a matched mold which is at 70°F. (21°C.) and the mold closed. After 5 seconds the mold opens and the headliner is removed. The cooled laminate has good formability, rigidity, strength and environmental stability and the paper is not significantly wrinkled, torn, or separated from the foamed sheet.

## Claims

1. A thermoformable laminate comprising a sheet of foamed thermoplastic polymer having a sheet of water-resistant paper laminated to one side thereof, characterised in that the said paper has a stretch value of at least 4% in the machine direction and of at least 2.5% in the cross-machine direction; a tensile strength value of at least 25 lbs/in. (4.5 kg/cm) in the machine direction and of at least 12 lbs/in. (2.1 kg/cm) in the cross-machine direction and a basis weight value of at least 15 lbs/1000 ft² (73.25 g/m²), where said values are selected so that after thermoforming of said laminate said paper does not have significant wrinkles or significant tears, and in that the said paper has a polypropylene or polyethylene film coating on one side thereof remote from the foamed polymer, and in that the foamed thermoplastic is an alloy of polystyrene and polyphenylene oxide.

2. The laminate of claim 1 having a non-woven decorative fabric laminated to the face of the said sheet of foamed thermoplastic polymer opposite to that to which the paper is laminated.

3. The laminate of claim 2 wherein said non-woven fabric is a non-woven fabric comprising fibers selected from the group consisting of polyester fibers, acrylic fibers and a blend of polyester fibers and wood pulp fibers.

## Patentansprüche

1. Thermisch verformbares Laminat, umfassend eine Schicht aus einem geschäumten thermoplastischen Polymer, auf deren eine Seite ein Blatt wasserbeständiges Papier laminiert ist, **dadurch gekennzeichnet,** daß das Papier eine Dehnbarkeit von mindestens 4 % in Arbeitsrichtung des Ziehwerkzeuges und mindestens 2,5 % quer zur Arbeitsrichtung; eine Zugfestigkeit von mindestens 25 Pfund/Zoll (4,5 kg/cm) in Arbeitsrichtung und mindestens 12 Pfund/Zoll (2,1 kg/cm) quer zur Arbeitsrichtung und eine Flächenmasse von mindestens 15 Pfund/1000 Quadratfuß (73,25 g/m")aufweist, wobei die Werte so gewählt sind, daß nach der thermischen Umformung des Laminates das Papier keine nennenswerten Falten oder bedeutenden Risse aufweist, sowie dadurch, daß das Papier eine Beschichtung mit einem Polypropylen- oder Polyethylenfilm auf der Seite trägt, die dem geschäumten Polymer gegenüberliegt, und daß das geschäumte Polymer eine Mischung aus Polystyrol und Polyphenyloxid ist.

2. Laminat nach Anspruch 1, **dadurch gekennzeichnet,** daß es einen nicht gewebten dekorativen Stoff aufweist, welcher auf die Seite des geschäumten thermoplastischen Polymers laminiert ist, welche der mit Papier laminierten Seite gegenüberliegt.

3. Laminat nach Anspruch 2, **dadurch gekennzeichnet,** daß der nicht gewebte Stoff Fasern enthält, die der Gruppe Polyesterfasern, Acrylfasern sowie einer Mischung aus Polyesterfasern und Zellstoffasern angehören.

## Revendications

1. Un stratifié thermoformable comprenant une feuille de polymère thermoplastique alvéolaire présentant une feuille de papier résistant à l'eau stratifiée sur un côté de celle-ci, caractérisé en ce que ledit papier présente une valeur d'étirage au moins égale à 4 % dans le sens machine et au moins égale à 2,5 % dans le sens transversal de la machine ; une valeur de résistance à la traction au moins égale à 25 livres/pouce (4,5 kg/cm) dans le sens machine et au moins égale à 12 livres/pouce (2,1 kg/cm) dans le sens transversal de la machine, et un grammage au moins égal à 15 livres/1 000 pieds² (73,25 g/m²), dans lequel les dites valeurs sont sélectionnées de sorte que, après thermoformage du dit stratifié, ledit papier ne présente pas de froissement ou de déchirure significative, et en ce que ledit papier présente un film de polypropylène ou polyéthylène enrobé sur un côté de celui-ci éloigné du polymère alvéolé, et en ce que le matériau thermoplastique alvéolaire est un alliage de polystyrène et d'oxyde de polyphénylène.

2. Le stratifié selon la Revendication 1, présentant un tissu décoratif non tissé stratifié sur la face de ladite feuille du polymère thermoplastique alvéolaire opposée à celle sur laquelle le papier est stratifié.

3. Le stratifié selon la Revendication 2, dans lequel ledit tissu non tissé est un tissu non tissé comprenant des fibres sélectionnées parmi le groupe composé de fibres de polyester, de fibres acryliques et d'un mélange de fibres de polyester et de fibres de cellulose technique.
